Europäisches Patentamt

European Patent Office

Office européen des brevets

(11) Publication number: **0 218 558**
**A1**

## (12) EUROPEAN PATENT APPLICATION

(21) Application number: **86830272.0**

(22) Date of filing: **01.10.86**

(51) Int. Cl.⁴: **H 04 Q 9/16**, H 02 J 13/00

(30) Priority: **01.10.85 IT 2232285**

(43) Date of publication of application: **15.04.87**
**Bulletin 87/16**

(84) Designated Contracting States: **DE ES FR GB**

(71) Applicant: **CAVIS CAVETTI ISOLATI S.p.A., Via Roma, 31, I-15023 Felizzano (Alessandria) (IT)**

(72) Inventor: **Codrino, Giuseppe, Via Stazione, 2, I-15028 Quattordio (Alessandria) (IT)**

(74) Representative: **Cicogna, Franco, Ufficio Internazionale Brevetti Dott.Prof. Franco Cicogna Via Visconti di Modrone, 14/A, I-20122 Milano (IT)**

(54) **Electronic apparatus for the transmission of data on a single wire, operable to control a limited number of utilisers.**

(57) This apparatus essentially comprises a transmission unit (1) capable of sending a coded signal (2), constituted by a packet of pulses, having suitably differentiated lengths.

In particular, the said coded signal is transmitted on the same supply line (3) to the various utilisers (4), which incorporate corresponding decoder units (5), able to recognise the address of the signal itself, determined by the length of the said packet of pulses.

- 1 -

"Electronic apparatus for the transmission of data on a
single wire, operable to control a limited number of
utilisers"                                                    .

The present invention relates to electronic apparatus
for the transmission of data on a single wire, operable
to control a limited number of utilisers.

As is known, for the control of apparatus at a distance
in general, recourse is usually made conventionally to
remote controls, that is to say, to systems which allow
an input signal (control quantity) to be carried to the
apparatus itself.

It is likewise known that, at times, the installation of
control wires can be inconvenient, both from an economic
point of view and because of practical difficulties of
putting it into effect.

The object of the present invention is that of
eliminating the previously lamented disadvantages, by
providing electronic apparatus which, with a single
wire, allows several utilisers to be controlled.

Within the scope of the stated object, a particular
object of the present invention is that of providing
electronic control apparatus which can make use of
pre-existing wires, advantageously the same wire as supplies the loads.

Another object of the present invention is that of providing electronic apparatus for the transmission of control data which has full operating reliability.

The said object, as well as the above listed objects and others which will possibly become better apparent hereinbelow, are achieved according to the invention by electronic apparatus for the transmission of control data, characterised by the fact that it essentially comprises a transmission unit capable of transmitting a coded signal on the same supply line to the various utilisers, which incorporate corresponding decoder units; this coded signal is constituted by a packet of pulses the length of which, compared by the said decoder units, is able selectively to activate the utilisers connected thereto.

Further characteristics and advantages of the electronic control apparatus which constitutes the subject of the present Patent of invention can be better understood with the aid of the following description of a general embodiment of the apparatus itself, illustrated purely by way of indication, in the attached drawings, in which:

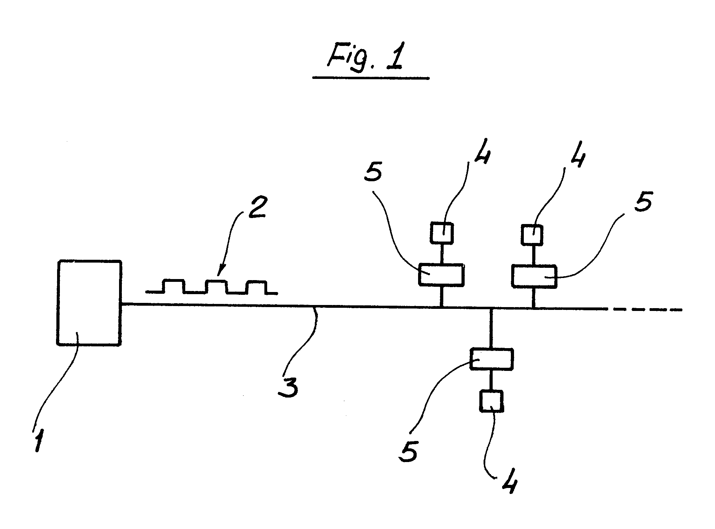

In Figure 1 this apparatus is shown in schematic form.

With particular reference to the numerical symbols of the said Figure, the electronic apparatus for the transmission of controls, in question, comprises a transmission unit 1, capable of generating a coded signal 2 which, by suitable arrangements, which, however, are of known type, is sent along the cable 3 which supplies the various utilisers 4 to be actuated.

More precisely, the aforesaid transmission unit is able to send, on the supply cable, a packet of pulses the length of which defines which of the units 4 is to be put into operation.

These units (which receive all the signals), in fact are provided with a decoder unit 5 able to determine, on the basis of the length of the packet of pulses, whether or not they are identified by the control signal, and consequently, if they have to activate the utiliser connected thereto or not.

The advantages of the present apparatus will be evident, especially in the sectors in which it is necessary to obtain remote control of devices or apparatus and a supply line already exists.

For example, with reference to the shipyard sector, a single operator, positioned downstream, can be given the possibility of remote controlling a series of apparatuses, positioned upstream.

If a supply line already exists (normally an electric line), in particular, such a system does not require the consumption of time for installation, it being sufficient to connect to the line, downstream, and to the apparatus upstream, the electronic units constituting the apparatus in question.

Another practical application of this latter can be advantageously made for the control of apparatus for maintenance along a telpher, or a cable transport system with evident saving of time and labour.

An example of utilisation in the civil engineering sector can be encountered in the remote control of utiliser devices in a second house: it is possible, in fact, telephonically, to activate or disactivate the heating, control the burglar alarm system, etc.

From what has been explained hereinabove, and from observation of the attached drawing, the great functionality and practicality in use which characterises the electronic apparatus for the transmission of controls, constituting the subject of the present Patent of invention, will be apparent.

Obviously, this apparatus has been described and illustrated hereinabove purely by way of indicative, but non-limitative, example, and only for the purpose of demonstration of the practicability and general characteristics of the present invention so that all those variants and modifications within the scope of an expert in the art and susceptible of being brought into the ambit of the inventive concept explained above can be introduced thereto.

Claims:

1.   Electronic apparatus for the transmission of controls along a wire, characterised by the fact that it essentially comprises a transmission unit capable of sending a coded signal on the supply line to the various utilisers, which incorporate corresponding decoder units; this coded signal is constituted by a packet of pulses the length of which, deleted by the said decoder units, is able selectively to activate the utilisers connected thereto.

2.   Electronic apparatus for the transmission of controls along a wire, characterised by the fact that the said transmission unit generates a coded signal which, by means of suitable arrangements, of known type, is sent along the supply cable to the various utilisers to be actuated; more precisely, the said transmission unit is able to send on the supply cable a packet of pulses the length of which defines which of the utilisers is to be activated.

3.   Electronic apparatus for the transmission of controls along a wire, characterised by the fact that the said utiliser units (which receive all the signals) are provided with a decoder unit able to determine, on the basis of the length of the packet of pulses, whether or not the utiliser is identified by the control signal, and consequently, whether or not they must activate the utilisers connected to them.

Fig. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-4 540 890 (GANGEMI) <br> * Whole doment * | 1-3 | H 04 Q 9/16 <br> H 02 J 13/00 |
| | --- | | |
| A | GB-A-1 101 122 (EVERSHED & VIGNOLES) <br> * Claims 1,4; figure 1 * | 1-3 | |
| | --- | | |
| A | GB-A-1 392 615 (MINISTERIUM FUR VERKEHRSWESEN) <br> * Claims 1,4 * | 1-3 | |
| | ----- | | |

**TECHNICAL FIELDS SEARCHED (Int. Cl.4)**

G 08 C
H 02 J
H 04 Q

The present search report has been drawn up for all claims

| Place of search | Date of completion of the search | Examiner |
|---|---|---|
| THE HAGUE | 07-01-1987 | WANZEELE R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82